# EUROPEAN PATENT APPLICATION

(11) **EP 2 224 163 A1**
(43) Date of publication of application: **01.09.2010**
(21) Application number: 09153920.5
(22) Date of filing: 27.02.2009
(51) Int. Cl.: F21V 9/16, A01G 7/04, A01G 9/20, C09K 11/00, F21V 11/02, F21V 11/06

(54) **Lighting arrangement for light conversion and spreading**

(71) Applicant: Reddy Solutions, 2396 AP Koudekerk a.d. Rijn (NL)
(72) Inventor: Lommerts, Bert Jan, 1703 RB, Heerhugowaard (NL)
(74) Representative: Ketelaars, Maarten F.J.M.

(57) **Abstract**

Lighting arrangement for operation with a light source (1) emitting energy in a spectrum of wavelengths at least in a first direction towards an area to be illuminated. The lighting arrangement comprising a wavelength shift device (2) arranged to receive light emitted from the light source (1) on a receiving side (5) of the wavelength shift device (2), and to shift a part of the energy received on the receiving side (5) into energy with a wavelength in the range of 600-660 nm. The wavelength shift device (2) is a plate of energy transforming material, comprising a directional coupling layer (2a) for emitting shifted light substantially from a second side (6) of the wavelength shift device (2), the second side (6) being opposite the receiving side (5).

## Description

### Field of the invention

The present invention relates to a lighting arrangement for light conversion and spreading. More in particular, the present invention relates to a lighting arrangement for operation with a light source emitting energy in a spectrum of wavelengths at least in a first direction towards an area to be illuminated, the lighting arrangement comprising a wavelength shift device arranged to receive light emitted from the light source on a receiving side of the wavelength shift device, and to shift a part of the energy received on the receiving side into energy with a wavelength in the range of 600-660 nm.

### Prior art

Japanese patent application JP-A-5153869 discloses an agricultural vinyl chloride based resin film. A fluorescent agent is present in a film layer provided with longitudinal grooves. The grooves have a depth of between 1/50 and 3/10 of the thickness of the film and the pitch of the grooves is between 5-200 µm. The film is used in a green house set-up to allow changing the amount of (sun) light introduced between summer and winter season.

The article 'Light manipulating additives extend opportunities for agricultural plastic films', Plastics Additives & Compounding, March 2002, discloses a plastic film with additives which absorb energy in the UV range and luminesce energy in the red light range.

### Summary of the invention

The present invention seeks to provide a lighting arrangement which allows to improve the efficiency of lighting in e.g. a green house.

According to the present invention, a lighting arrangement according to the preamble defined above is provided, wherein the wavelength shift device is a plate of energy transforming material, comprising a directional coupling layer for emitting shifted light substantially from a second side of the wavelength shift device, the second side being opposite the receiving side. In this sense, energy transforming material may e.g. be a material, or material addition which is based on luminescence, fluorescence or phosphorescence. By using a plate of material, sufficient structural stability is provided to allow easy manufacture of the lighting arrangement, without need of any complex structural fixtures. The wavelength shift device is e.g. provided having a flat plate shape. The directional coupling layer assures that a higher percentage of the transformed light is radiated from the second side of the plate, thus increasing efficiency.

In one embodiment, the lighting arrangement further comprises one or more mirror bodies for limiting the emitted energy to a predetermined opening angle with respect to the first direction. The mirror bodies reflect the light towards where it is needed.

In a further embodiment, the lighting arrangement further comprises one or more secondary mirror bodies for reflecting light from the light source towards the receiving side of the wavelength shift device. This will improve the efficiency of the lighting arrangement as more of the radiation emitted by the light source will eventually end up where it is needed.

The directional coupling layer comprises in a further embodiment an indentation on the receiving side of the wavelength shift device, e.g. a triangular indentation such as a V-shaped groove. This allows capturing light form the light source into the plate, and also assures that light trapped in the plate is directed towards the second side.

In a further embodiment, the wavelength shift device comprises a waveguide layer on the bottom side of the wavelength shift device. This may provide a structural rigidity to the plate, and may also help to aid in the directional coupling of the light.

The wavelength shift device has a thickness of more than 3 mm in a further embodiment in order to be able to have sufficient energy transforming material in the plate, and to provide structural rigidity to the plate.

In a further embodiment, the wavelength shift device is dimensionally stable up to a temperature of about 300 °C. This allows to use the plate also in the vicinity of the light source (which usually gets very hot) without the risk of plastic deformation or even incineration.

To provide an even better structural rigidity, the wavelength shift device is positioned on top of a carrier plate in a further embodiment.

In a further set of embodiments, the lighting arrangement comprises a third mirror body with a mirror surface positioned opposite the light source with respect to the area to be illuminated. This allows more light emitted by the light source to be transformed and emitted towards the crop.

The wavelength shift device is positioned on a curved surface of the third mirror body in a further embodiment. This allows to provide a very compact lighting arrangement, as no elements are needed below the light source itself. By combining this embodiment with one of the embodiments described above, an even more efficient lighting arrangement is obtained.

In a further embodiment, the wavelength shift device is positioned at a distance from the third mirror body and the light source. E.g. the wavelength shift device comprises a plurality of lamellae. This allows to obtain a very light structure, as no solid plate is needed. Furthermore, the angle and pitch of the lamellae may be adjusted to optimize the radiation of energy towards the area to be illuminated.

The wavelength shift device comprises a flat plate in a further embodiment having a plurality of reflecting walls positioned substantially perpendicular to a surface of the flat plate, e.g. in the form of a honeycomb structure. This provides an increased rigidity of the wavelength shift device.

In a further aspect, the present invention also relates to a combination of one or more lighting arrangements according to any one of the embodiment described above and one or more light sources, in which the combinations are positioned in a green house. Use of such a combination may be very effective in growing crop in a green house, but also for growing other organisms such as algae.

### Short description of drawings

The present invention will be discussed in more detail below, using a number of exemplary embodiments, with reference to the attached drawings, in which
Fig. 1 shows a schematic view of a lighting arrangement according to a first embodiment of the present invention;
Fig. 2 shows a schematic view of a lighting arrangement according to a second embodiment of the present invention;
Fig. 3 shows a schematic view of a lighting arrangement according to a third embodiment of the present invention;
Fig. 4 shows a schematic view of an application of the present invention lighting arrangement in a green house;
Fig. 5 shows a cross sectional view in detail of a plate used in one of the present invention embodiments;
Fig. 6 shows a top view of a part of a plate used in one of the present invention embodiments;
Fig. 7 shows a schematic view of a lighting arrangement according to a fourth embodiment of the present invention;
Fig, 8 shows a schematic view of a lighting arrangement according to a fifth embodiment of the present invention; and
Fig, 9 shows a schematic view of a lighting arrangement according to a sixth embodiment of the present invention.

### Detailed description of exemplary embodiments

In the art of growing crops, such as plants, vegetables, algae etc. in green houses, on a large scale use is made of artificial lighting to maximize the yield of production. When using incandescent lighting as light sources, the energy emitted is characterized by a wide spectrum of wavelengths from UV to IR radiation. Also other types of light sources emit energy in a broad spectrum, or at least in a broader spectrum than actually absorbed by the crop for growing.

Materials are known which transform energy in a specific wavelength range into energy into another (usual longer) wavelength range. These energy transforming materials may be based on luminescent, fluorescent or phosphorescent effects, and are widely known, see e.g. the article 'Light manipulating additives extend opportunities for agricultural plastic films', Plastics Additives & Compounding, March 2002. For agricultural purposes, usually the transformed light is in the red light wavelength range (i.e. 600-700 nm), as this is beneficial for crop growth.

A disadvantage of these films (which are usually made as foils or thin films) is that the transformed energy is radiated in all directions. As a result, not all the emitted red light will arrive at the crop.

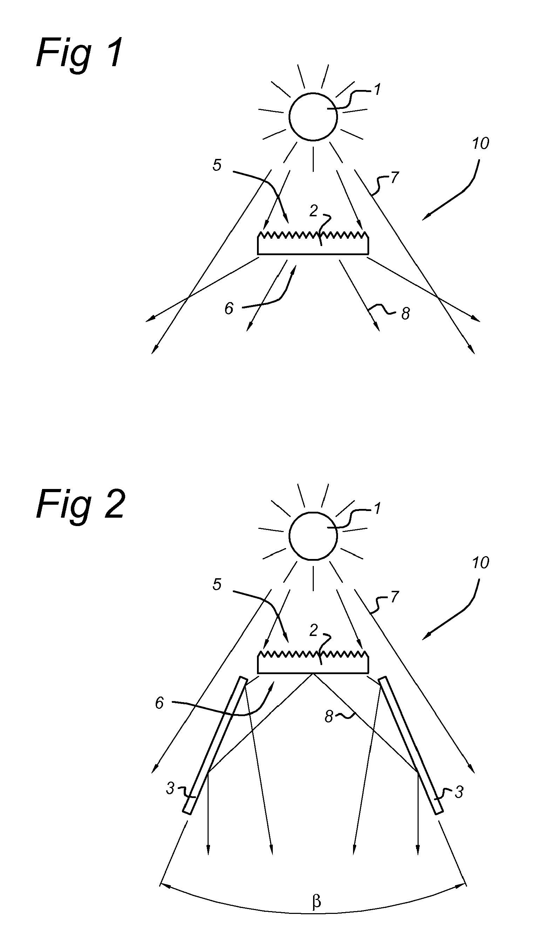

According to the present invention, this problem is solved by using wavelength shift device 2 in the form of a plate of energy transforming material. One embodiment of the lighting arrangement 10 according to the present invention is shown in a cross sectional view as depicted in Fig. 1. The light source 1 is shown as emitting broad band radiation 7 in all directions. Also, a light source 1 in the form of a directed light source 1 may be implemented in the present invention embodiments, e.g. using reflectors or armatures.

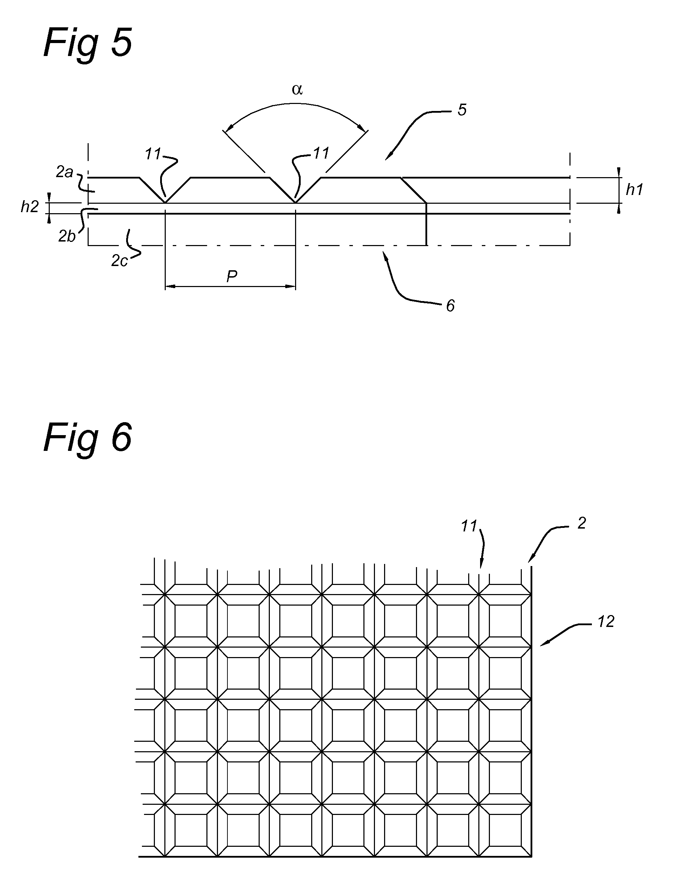

A wavelength shift device 2 is provided which as described above is arranged to receive light emitted from the light source 1 on a receiving side 5 of the wavelength shift device 2, and to shift a part of the energy received on the receiving side 5 into energy with a wavelength in the range of 600-660 nm. The wavelength shift device 2 comprises a directional coupling layer 2a (see Fig. 6 below for more details) for emitting shifted light 8 substantially from a second side 6 of the plate, the second side 6 being opposite the receiving side 5.

The material used for the wavelength shift device 2 is e.g. Lumogen® F Red 305 supplied by BASF, which absorbs light around 578 nm wavelength, and re-emits this energy as 613 nm wavelength radiation. The material may be part of or contained in a base material for forming a structurally stable plate.

As a result of the directional coupling layer 2a of the plate 2, a higher amount of shifted light 8 is obtained which is emitted from the second side 6 of the plate, which eventually reaches the crop. Also, a higher percentage of the radiation 7 is coupled into the wavelength shift device 2 because of the directional coupling layer 2a.

As can be seen in the embodiment shown in Fig.1, the energy emitted from the second side 5 of the plate 2 is radiated in a large angle because of the scattering and omni-directional nature of the luminescent material. To obtain a more directed beam of transformed light 8 (increasing the amount of energy reaching the crop below the lighting arrangement 10) a second embodiment of the present invention is provided, as shown in a cross sectional view in Fig. 2. In this embodiment, the lighting arrangement 10 further comprises one or more mirror bodies 3 for limiting the emitted energy to a predetermined opening angle β. The opening angle is e.g. less than 90° in an exemplary embodiment. The mirror bodies 3 are provided with a reflecting surface, which in a further embodiment, is adapted to specifically reflect energy in the red wavelength range (600-700 nm).

The lighting arrangement (or only the mirror bodies 3) has a rectangular construction, resulting in a rectangular surface on the ground where crop is illuminated. In alternative embodiments other shapes may be used such as circular or elliptical.

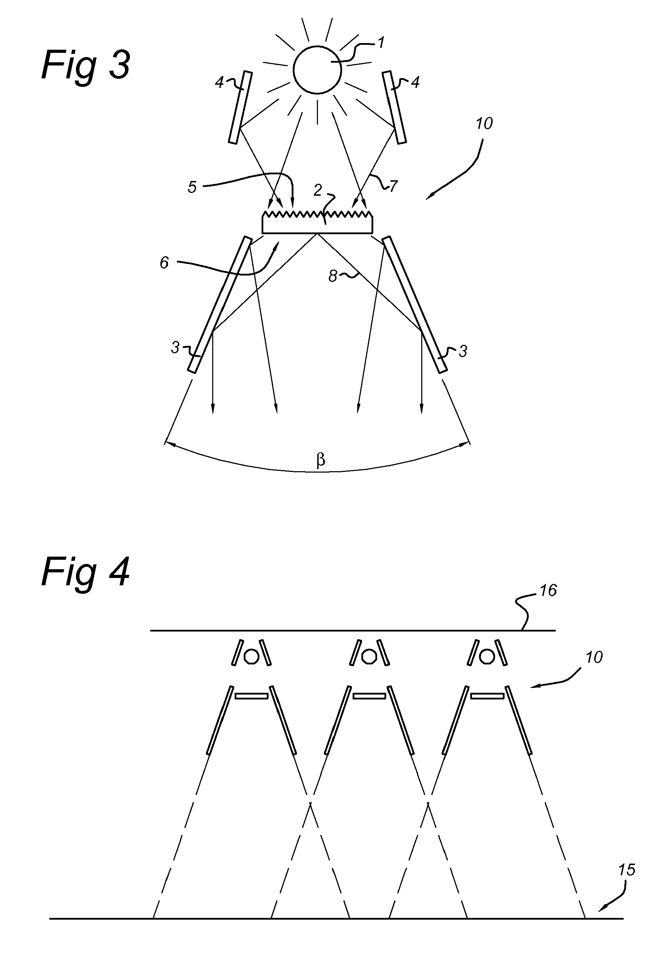

To further improve the efficiency of the light source 1 as used in a green house, the lighting arrangement 10 further comprises one or more secondary mirror bodies 4 for reflecting light from the light source 1 towards the receiving side 5 of the wavelength shift device 2. This embodiment is shown in a cross sectional view of Fig. 3. Using this embodiment, more of the light energy emitted by the light source 1 (emitted radiation 7) is eventually reaching the wavelength shift device 2 and transformed into transformed light 8.

In the embodiments of Fig. 2 and Fig. 3, the mirror bodies 3 and secondary mirror bodies 4 are shown as flat mirrors. This allows easy manufacturing of the lighting arrangement, while still allowing to efficiently steer the transformed light 8 and the emitted radiation 7. In further alternative embodiments, the mirror bodies 3 and/or secondary mirror bodies 4 may be implemented using other surface shapes, such as convex surfaces, projecting a more concentrated beam of light.

In Fig. 4, a schematic view is shown of a combination of one or more lighting arrangements 10 according to one of the embodiments described above and one or more light sources 1, in which the combinations are positioned in a green house 16. Usually the lighting arrangements 10 are positioned in the top part of the green house (e.g. attached to a roof of the green house 16) in order to provide light to the crop on a ground surface 15 of the green house 16. The crop may be any known crop being grown in a green house 16, such as lettuce, spinach, tomatoes, but also other types of organisms grown in green houses 16 such as algae or other biomass products.

In Fig. 5 a cross sectional view s shown of a part of a wavelength shift device 2 as used in exemplary embodiments of the present invention. In order to obtain a directional coupling layer 2a, a plate 2 of energy transforming material is provided with V-shaped grooves, or triangular indentations 11 on the receiving side 5 of the plate 2. The opening angle α of the grooves 11 is in a further embodiment less than 90° in order to direct as much as light as possible towards the second side 6 of the plate 2. The grooves 11 may be formed in a flat plate 2 e.g. using milling techniques.

The plate 2 is provided with a waveguide layer 2b in a further embodiment. This allows energy in the form of light entering the plate 2 from the receiving side 5 to be captured as much as possible, allowing to provide as much as possible shift of wavelength using the energy transforming material in the plate 2. Also, the waveguide layer 2b lay provide additional structural rigidity to the plate 2 to allow using the plate 2 with only a supporting structure at its edges.

In an even further embodiment, the plate 2 is positioned on top of a carrier plate 2c, which is indicated by the dashed line in embodiment shown in Fig. 5. This provides even more structural rigidity to the lighting arrangement 10, and when the material is chosen correctly having sufficient transparency in the relevant wavelength range, all the energy desired for growing crop (i.e. red light in the range 600-660 nm) is still allowed to exit the second side 6 of the plate 2.

In one specific embodiment, the height h1 of the directional coupling layer 2a is about 3 mm, and the height h2 of the waveguide layer 2b is about 1 mm.

The grooves 11 may be provided in the plate 2 in a parallel manner. This would provide a directional coupling effect in a single axis direction (i.e. perpendicular to the groove direction. In a further embodiment, which is shown in an enlarged top view in Fig. 6, two sets of grooves 11, 12 are provided, which are substantially perpendicular to each other. This will result in the pattern as shown in Fig. 6, and provides a directional coupling effect in two (substantial perpendicular) directions.

By having a plate 2 of energy transforming material with a thickness of at least 3mm, chosen from the right material, the plate is sufficiently light to be used with a large surface area (receiving side 5/ second side 6), without the necessity to use large supporting structures.

In a further embodiment, the plate 2 is dimensionally stable up to a temperature of at least 300 °C. This allows use of the lighting arrangement close to the light source 1, without a chance that the plate 2 melts or loses its plate shape. E.g. when using glass or acrylate (e.g. PMMA) as basis material for the plate 2, a rigid and dimensionally stable plate 2 is obtained.

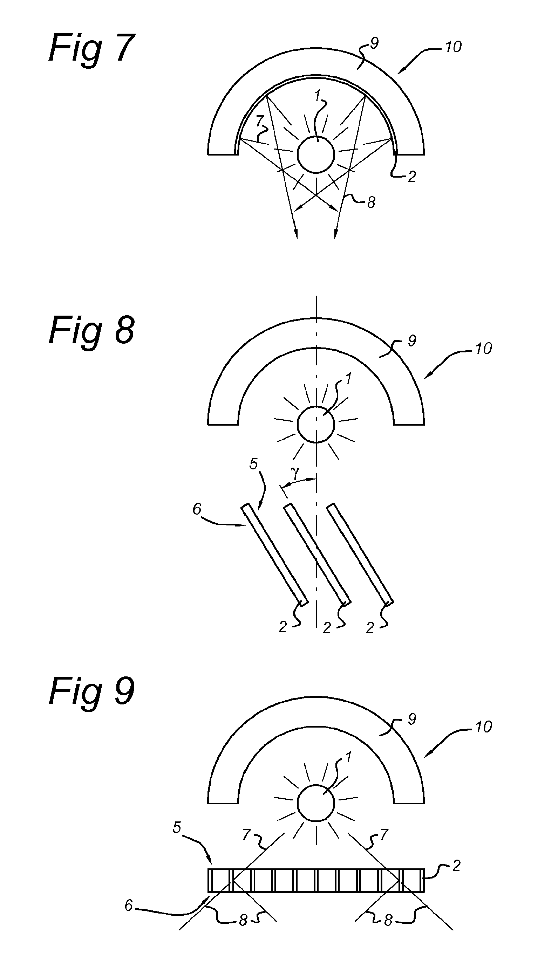

A set of further embodiments of the present lighting arrangement is shown in Fig. 7-9. In these embodiments a third mirror body 9 is provided with a mirror surface positioned opposite the light source 1 with respect to the area to be illuminated. This third mirror body 9 is provided as a reflector to direct light from the light source 1 towards an area to be illuminated (cf. ground surface 15 of Fig. 4).

In the fourth embodiment as shown in the schematic view of Fig. 7, the wavelength shift device 2 is positioned on a curved surface of the third mirror body 9. In this manner, light emitted from the light source 1 in an upward direction is shifted in wavelength by the wavelength shift device 2, and then reflected by the third mirror body surface, through the wavelength shift device once again, towards an are to be illuminated. As the light travels through the wavelength shift device 2 twice, conversion into the wavelength region of interest is further optimized. In other words, the receiving side 5 and second side 6 are interchanged after reflection at the surface of the third mirror body 9. The third mirror body 9 as shown in Fig. 7 spans about half of a sphere around the light source 1. A smaller solid angle (i.e. smaller than 2π steradians) may also produce satisfying effects.

As an option, the lighting arrangement according to the embodiment of Fig. 7 may be added to one of the embodiments as described above, in order to also convert radiation emitted by the light source 1 directly directed at the area to be illuminated.

Fig. 8 shows a fifth embodiment of a lighting arrangement according to the present invention. In this embodiment, a third mirror body 9 is provides similar as the embodiment described above in relation to Fig. 7. In this embodiment, the wavelength shift device 2 is positioned at a distance from the third mirror body 9 and the light source 1. This causes both the direct radiation, and the radiation reflected by the third mirror body 9 to impinge upon the wavelength shift device 2. In the embodiment shown, the wavelength shift device comprises a plurality of lamellae, under an angle γ with a first direction from the light source 1 towards the area to be illuminated. Each of the lamellae is embodied as a wavelength shift device 2 in itself, i.e. made of a energy transforming material and provided with a directional coupling layer 2a. Alternatively, the lamellae may also be provided with a reflector or a reflecting surface. The angle γ may be varied to obtain an efficient as possible lighting of the are to be illuminated with the energy shifted radiation.

In Fig. 9, a sixth embodiment of the present lighting arrangement is shown. In this embodiment, the wavelength shift device 2 comprises a flat plate having a plurality of reflecting walls positioned substantially perpendicular to a surface of the flat plate. The emitted radiation 7 is reflected on the walls, and partially deflected into the walls, where the energy is wavelength shifted as discussed in the various embodiments described above. In one specific embodiment, the wavelength shift device 2 is implemented as a plate having a honeycomb structure of walls of energy transforming material. As the walls provide for rigidity, less material is needed for the wavelength shift device 2.

## Claims

1. Lighting arrangement for operation with a light source (1) emitting energy in a spectrum of wavelengths at least in a first direction towards an area to be illuminated, the lighting arrangement comprising a wavelength shift device (2) arranged to receive light emitted from the light source (1) on a receiving side (5) of the wavelength shift device (2), and to shift a part of the energy received on the receiving side (5) into energy with a wavelength in the range of 600-660 nm,
wherein the wavelength shift device (2) is a plate of energy transforming material, comprising a directional coupling layer (2a) for emitting shifted light substantially from a second side (6) of the wavelength shift device (2), the second side (6) being opposite the receiving side (5).

2. Lighting arrangement according to claim 1, wherein the lighting arrangement (10) further comprises one or more mirror bodies (3) for limiting the emitted energy to a predetermined opening angle (β) with respect to the first direction.

3. Lighting arrangement according to claim 1 or 2, wherein the lighting arrangement (10) further comprises one or more secondary mirror bodies (4) for reflecting light from the light source (1) towards the receiving side (5) of the wavelength shift device (2).

4. Lighting arrangement according to any one of claims 1-3, wherein the directional coupling layer (2a) comprises an indentation (11, 12) on the receiving side (5) of the wavelength shift device (2).

5. Lighting arrangement according to any one of claims 1-4, wherein the wavelength shift device (2) comprises a waveguide layer (2b) on the bottom side of the wavelength shift device (2).

6. Lighting arrangement according to any one of claims 1-5, wherein the wavelength shift device (2) has a thickness of more than 3 mm.

7. Lighting arrangement according to any one of claims 1-6, wherein the wavelength shift device (2) is dimensionally stable up to a temperature of 300 °C.

8. Lighting arrangement according to any one of claims 1-7, wherein the wavelength shift device (2) is positioned on top of a carrier plate (2c).

9. Lighting arrangement according to claim 1, wherein the lighting arrangement (10) comprises a third mirror body (9) with a mirror surface positioned opposite the light source (1) with respect to the area to be illuminated.

10. Lighting arrangement according to claim 9, wherein the wavelength shift device (2) is positioned on a curved surface of the third mirror body (9).

11. Lighting arrangement according to claim 9, wherein the wavelength shift device (2) is positioned at a distance from the third mirror body (9) and the light source (1).

12. Lighting arrangement according to any one of claims 9-11, wherein the wavelength shift device (2) comprises a plurality of lamellae.

13. Lighting arrangement according to any one of claims 9-12, wherein the wavelength shift device (2) comprises a flat plate having a plurality of reflecting walls positioned substantially perpendicular to a surface of the flat plate.

14. Combination of one or more lighting arrangements (10) according to any one of claims 1-13 and one or more light sources (1), in which the combinations are positioned in a green house.

15. Use of a combination according to claim 14 for growing algae.
